# EUROPEAN PATENT SPECIFICATION

(11) **EP 2 933 311 B1**
(45) Date of publication and mention of the grant of the patent: **19.06.2019**
(21) Application number: 13865859.6
(22) Date of filing: 12.12.2013
(51) Int. Cl.: C08K 5/053, C08K 5/52, C08L 23/00, C09K 21/04, C09K 21/10, C09K 21/14

(54) **FLAME RETARDANT COMPOSITION AND FLAME-RETARDANT SYNTHETIC RESIN COMPOSITION**
FLAMMHEMMENDE ZUSAMMENSETZUNG UND FLAMMHEMMENDE KUNSTHARZZUSAMMENSETZUNG
COMPOSITION IGNIFUGE ET COMPOSITION DE RÉSINE SYNTHÉTIQUE IGNIFUGE

(30) Priority: 17.12.2012 JP 2012274856
(43) Date of publication of application: 21.10.2015
(73) Proprietor: Adeka Corporation, Tokyo 116-0012 (JP)
(72) Inventor: YAMAZAKI KENJI, Saitama-shi Saitama 336-0022 (JP); SHIMIZU Tatsuya, Saitama-shi Saitama 336-0022 (JP); KAMIMOTO Tetsuo, Saitama-shi Saitama 336-0022 (JP)
(74) Representative: Gill Jennings & Every LLP
(86) International application number: PCT/JP2013/083390
(87) International publication number: WO 2014/097967

(56) References cited:
- EP-A1- 2 524 945
- WO-A1-2009/063732
- WO-A1-2012/079243
- JP-A- S6 036 542
- JP-A- H09 221 567
- JP-A- H11 315 174
- JP-A- 2003 026 935
- JP-A- 2003 160 701
- JP-A- 2003 535 180
- US-A1- 2011 294 930

## Description

### TECHNICAL FIELD

The present invention relates to a flame retardant composition for a synthetic resin and a flame-retardant synthetic resin composition comprising the flame retardant composition. More particularly, the present invention relates to a flame retardant composition which shows a flame retarding effect in a small amount, and a flame-retardant synthetic resin composition comprising the flame retardant composition.

### BACKGROUND ART

Conventionally, synthetic resins, because of their excellent chemical and mechanical properties, have been widely used in building materials, automobile components, packaging materials, agricultural materials, housing materials of home electrical appliances, toys and the like. However, since many of the synthetic resins are flammable substances, it is indispensable that they be made flame retardant depending on the use. As a method of making a synthetic resin flame retardant, it is widely known to use one or a combination of halogen-based flame retardants, inorganic phosphorus-based flame retardants represented by red phosphorus and polyphosphate flame retardants such as ammonium polyphosphate, organic phosphorus-based flame retardants represented by triaryl phosphate compounds, metal hydroxides and flame retardant aids such as antimony oxide and melamine compounds.

However, halogen-based flame retardants have a problem in that they generate a toxic gas during combustion. Therefore, attempts have been made to use a phosphorus-based flame retardant that does not cause such a problem.

For example, Patent Document 1 discloses a flame-retardant synthetic resin composition comprising ammonium polyphosphate, a polyhydric hydroxyl group-containing compound, a triazine ring-containing compound and a metal hydroxide. In addition, Patent Documents 2 and 3 disclose flame-retardant synthetic resin compositions comprising melamine polyphosphate and (penta to tripenta)erythritol. Moreover, Patent Document 4 discloses a flame-retardant synthetic resin composition comprising polybutyrene terephthalate (PBT), melamine pyrophosphate and an aromatic phosphate oligomer. Furthermore, Patent Documents 5 and 6 describe that melamine pyrophosphate and other phosphorus compounds are effective for flame retardation of polymers such as PBT.

Thereamong, intumescent flame retardants, which exert flame retardancy by forming a surface intumescent layer when combusted and inhibiting diffusion of decomposition products and heat transfer, have excellent flame retardancy, and such intumescent flame retardants are described in, for example, Patent Document 7.

EP 2524945 A1 and WO 2012/079243 A1 relate to thermoplastic resin compositions.

### RELATED ART DOCUMENTS

### PATENT DOCUMENTS

Patent Document 1: Japanese Unexamined Patent Application Publication No. H8-176343
Patent Document 2: U.S. Patent No. 3936416
Patent Document 3: U.S. Patent No. 4010137
Patent Document 4: Japanese Unexamined Patent Application Publication No. H11-152402
Patent Document 5: U.S. Patent No. 4278591
Patent Document 6: U.S. Patent No. 5618865
Patent Document 7: Japanese Unexamined Patent Application Publication No. 2003-26935

### SUMMARY OF THE INVENTION

### PROBLEMS TO BE SOLVED BY THE INVENTION

However, the above-described intumescent flame retardants also have a problem that they are required to be incorporated in a large amount for imparting a synthetic resin with sufficient flame retardancy and thus adversely affect the physical properties inherent to the resin.

In view of the above, an object of the present invention is to provide a flame retardant composition capable of imparting a synthetic resin with excellent flame retardancy even when it is incorporated in a small amount. Another object of the present invention is to provide a flame-retardant synthetic resin composition and a molded article, which show excellent flame retardancy and have physical properties inherent to a resin.

### MEANS FOR SOLVING THE PROBLEMS

In order to solve the above-described problems, the present inventors intensively studied and discovered that the problems can be solved by a flame retardant composition comprising a combination of specific phosphate compounds and a polyhydric alcohol compound in accordance with the appended claims, thereby completing the present invention.

That is, the flame retardant composition of the present invention is characterized by comprising: 20 to 50 parts by mass of the following component (A); 50 to 80 parts by mass of the following component (B) (with a proviso that the total amount of the components (A) and (B) is 100 parts by mass); and 0.5 to 15 parts by mass of the following component (C):
Component (A): a (poly)phosphate compound represented by the following Formula (1)
Component (B): a (poly)phosphate compound represented by the following Formula (3)
Component (C): a polyhydric alcohol compound, wherein Component (C) is dipentaerythritol, 1,3,5-tris(2-hydroxyethyl)isocyanurate and/or sorbitol 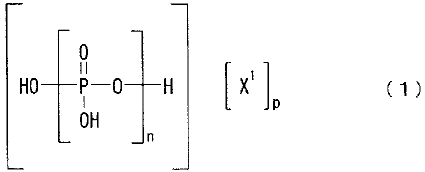 (wherein, n represents a number of 1 to 100; X¹ represents ammonia or a triazine derivative represented by the following Formula (2); and 0 < p ≤ n + 2) 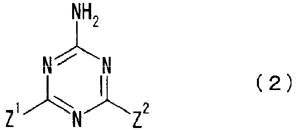 (wherein, Z¹ and Z² each independently represent a group selected from the group consisting of a -NR⁵R⁶ group [wherein, R⁵ and R⁶ each independently represent a hydrogen atom, a linear or branched alkyl group having 1 to 6 carbon atoms or a methylol group], a hydroxy group, a mercapto group, a linear or branched alkyl group having 1 to 10 carbon atoms, a linear or branched alkoxy group having 1 to 10 carbon atoms, a phenyl group and a vinyl group) 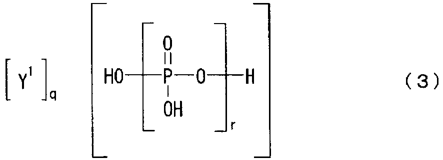 (wherein, r represents a number of 1 to 100; Y¹ represents [R¹R²N(CH₂)mNR³R⁴], piperazine or a piperazine ring-containing diamine; R¹, R², R³ and R⁴ each represent a hydrogen atom or a linear or branched alkyl group having 1 to 5 carbon atoms, which R¹, R², R³ and R⁴ may be the same group or different groups; m represents an integer of 1 to 10; and 0 < q ≤ r + 2).

It is preferred that the flame retardant composition of the present invention further comprise zinc oxide as a component (D) in an amount of 0.01 to 10 parts by mass with respect to a total of 100 parts by mass of the components (A) and (B).

It is also preferred that the flame retardant composition of the present invention further comprise an anti-dripping agent as a component (E) in an amount of 0.005 to 5 parts by mass with respect to a total of 100 parts by mass of the components (A) and (B).

In the flame retardant composition of the present invention, it is preferred that the component (A) be melamine pyrophosphate represented by the Formula (1), wherein n is 2, p is 2 and X¹ is melamine (Z¹ and Z² are -NH₂ in the Formula (2)).

In the flame retardant composition of the present invention, it is also preferred that the component (B) be a piperazine polyphosphate represented by the Formula (3), wherein q is 1 and Y¹ is piperazine.

Further, in the flame retardant composition of the present invention, it is preferred that the piperazine polyphosphate be piperazine pyrophosphate.

Still further, in the flame retardant composition of the present invention, it is preferred that the component (C) be dipentaerythritol.

Yet still further, in the flame retardant composition of the present invention, it is preferred that the component (C) be 1,3,5-tris(2-hydroxyethyl)isocyanurate and/or sorbitol.

The flame-retardant synthetic resin composition of the present invention is characterized in that it is obtained by incorporating any of the above-described flame retardant compositions into a synthetic resin, in accordance with the appended claims.

In the flame-retardant synthetic resin composition of the present invention, it is preferred that the synthetic resin be a polyolefin-based resin.

Further, it is preferred that the flame-retardant synthetic resin composition of the present invention comprise any of the above-described flame retardant compositions in an amount of not less than 15% by mass but less than 30% by mass.

The molded article of the present invention is characterized in that it is obtained from any of the above-described flame-retardant synthetic resin compositions, in accordance with the appended claims.

### EFFECTS OF THE INVENTION

According to the present invention, a flame retardant composition capable of imparting excellent flame retardancy in a small amount can be provided. In addition, according to the present invention, a synthetic resin composition which shows excellent flame retardancy without impairing the physical properties inherent to a resin can be provided. Furthermore, according to the present invention, a molded article which shows excellent flame retardancy and has physical properties inherent to a resin can be provided.

### MODE FOR CARRYING OUT THE INVENTION

The (poly)phosphate compound represented by the Formula (1), which is used as the component (A) in the flame retardant composition of the present invention, is a salt of phosphoric acid and ammonia or a triazine derivative.

Examples of the linear or branched alkyl group having 1 to 10 carbon atoms which is represented by Z¹ and Z² in the Formula (2) include methyl, ethyl, propyl, isopropyl, butyl, sec-butyl, tert-butyl, isobutyl, amyl, isoamyl, tert-amyl, hexyl, cyclohexyl, heptyl, isoheptyl, tert-heptyl, n-octyl, isooctyl, tert-octyl, 2-ethylhexyl, nonyl and decyl. Examples of the linear or branched alkoxy group having 1 to 10 carbon atoms include groups that are derived from these alkyl groups.

Specific examples of the triazine derivative include melamine, acetoguanamine, benzoguanamine, acrylguanamine, 2,4-diamino-6-nonyl-1,3,5-triazine, 2,4-diamino-6-hydroxy-1,3,5-triazine, 2-amino-4,6-dihydroxy-1,3,5-triazine, 2,4-diamino-6-methoxy-1,3,5-triazine, 2,4-diamino-6-ethoxy-1,3,5-triazine, 2,4-diamino-6-propoxy-1,3,5-triazine, 2,4-diamino-6-isopropoxy-1,3,5-triazine, 2,4-diamino-6-mercapto-1,3,5-triazine, and 2-amino-4,6-dimercapto-1,3,5-triazine.

The (poly)phosphate compound represented by the Formula (1) which is preferably used as the component (A) is, for example, a salt of phosphoric acid and melamine or an ammonium polyphosphate compound.

Examples of the salt of phosphoric acid and melamine which is preferably used include melamine orthophosphate, melamine pyrophosphate and melamine polyphosphate, among which melamine pyrophosphate represented by the Formula (1) wherein n is 2, p is 2 and X¹ is melamine is particularly preferred. The salt of phosphoric acid and melamine can be obtained by the following method. For example, in the case of melamine pyrophosphate, it can be obtained by allowing sodium pyrophosphate to react with melamine at an arbitrary reaction ratio with an addition of hydrochloric acid and neutralizing the resultant with sodium hydroxide.

As the ammonium polyphosphate, a commercially available product can be used, and examples thereof include EXOLIT 422 and EXOLIT 700, which are manufactured by Clariant International Ltd.; PHOS-CheK P/30 and PHOS-CheK P/40, which are manufactured by Monsanto Ltd.; SUMISAFE-P manufactured by Sumitomo Chemical Co., Ltd.; and TERRAJU S10 and TERRAJU S20, which are manufactured by Chisso Corporation.

Alternatively, as the ammonium polyphosphate, a compound containing an ammonium polyphosphate as a main component, such as surface-treated ammonium polyphosphate, may be used. Examples of the compound containing an ammonium polyphosphate as a main component include ammonium polyphosphate coated or microencapsulated with a thermosetting resin; ammonium polyphosphate whose surface is coated with a melamine monomer, other nitrogen-containing organic compound or the like; ammonium polyphosphate treated with a surfactant or silicon; and ammonium polyphosphate which is, in the production process thereof, made insoluble by an addition of melamine or the like.

Examples of commercially available products of the compound containing an ammonium polyphosphate as a main component include EXOLIT 462 manufactured by Clariant International Ltd.; SUMISAFE-PM manufactured by Sumitomo Chemical Co., Ltd.; and TERRAJU C60, TERRAJU C70 and TERRAJU C80, which are manufactured by Chisso Corporation.

The component (A) may be a mixture of two or more of these compounds.

The (poly)phosphate compound represented by the Formula (3), which is used as the component (B) in the flame retardant composition of the present invention, is a salt of phosphoric acid and diamine or piperazine.

Specific examples of the diamine represented by Y¹ in the Formula (3) include N,N,N',N'-tetramethyldiaminomethane, ethylenediamine, N,N'-dimethylethylenediamine, N,N'-diethylethylenediamine, N,N-dimethylethylenediamine, N,N-diethylethylenediamine, N,N,N',N'-tetramethylethylenediamine, N,N,N',N'-diethylethylenediamine, tetramethylenediamine, 1,2-propanediamine, 1,3-propanediamine, tetramethylenediamine, pentamethylenediamine, hexamethylenediamine, 1,7-diaminoheptane, 1,8-diaminooctane, 1,9-diaminononane, 1,10-diaminodecane, piperazine, trans-2,5-dimethylpiperazine, 1,4-bis(2-aminoethyl)piperazine and 1,4-bis(3-aminopropyl)piperazine, all of which can be commercially available products.

The (poly)phosphate compound represented by the Formula (3) which is preferably used as the component (B) is, for example, a salt of phosphoric acid and piperazine. Specific examples of the salt of phosphoric acid and piperazine include piperazine orthophosphate, piperazine pyrophosphate and piperazine polyphosphate. Thereamong, a piperazine polyphosphate represented by the Formula (3) wherein q is 1 and Y¹ is piperazine, particularly piperazine pyrophosphate, is preferred.

The salt of phosphoric acid and piperazine can be obtained by the following method. For example, in the case of piperazine pyrophosphate, it can be easily obtained as a poorly water-soluble precipitate by allowing piperazine to react with pyrophosphoric acid in water or an aqueous methanol solution. However, in the case of a piperazine polyphosphate, it may be a salt obtained from piperazine and a polyphosphoric acid composed of a mixture of orthophosphoric acid, pyrophosphoric acid, tripolyphosphoric acid and other polyphosphoric acid(s), and the constitution of the polyphosphoric acid used as a raw material is not particularly restricted. The component (B) may be a mixture of two or more of these compounds.

As for the content of the components (A) and (B) in the flame retardant composition of the present invention, taking the total amount of the components (A) and (B) as 100 parts by mass, the component (A) is contained in an amount of 20 to 50 parts by mass and the component (B) is contained in an amount of 50 to 80 parts by mass.

The polyhydric alcohol compound used as the component (C) in the flame retardant composition of the present invention is a compound in which a plurality of hydroxyl groups are bound, and is dipentaerythritol, 1,3,5-tris(2-hydroxyethyl)isocyanurate (THEIC) and/or sorbitol. Other disclosed polyhydric alcohol compounds include pentaerythritol, tripentaerythritol, polypentaerythritol, neopentyl glycol, trimethylolpropane, ditrimethylolpropane, polyethylene glycol, glycerin, diglycerin, mannitol, maltitol, lactitol, erythritol, xylitol, xylose, sucrose, trehalose, inositol, fructose, maltose and lactose. Disclosed polyhydric alcohol compounds are pentaerythritol condensates, such as pentaerythritol, dipentaerythritol, tripentaerythritol and polypentaerythritol.

The pentaerythritol condensate may be a mixture of pentaerythritol and a pentaerythritol condensate(s) (in the present invention, this is referred to as "(poly)pentaerythritol mixture"), and this (poly)pentaerythritol mixture contains pentaerythritol having a degree of condensation, which is represented by n, of 1 to 3 (n = 1 to 3) and a condensate(s) thereof in a total of 5 to 40% by mass with respect to the total amount of the (poly)pentaerythritol mixture (wherein, the sum of the content of pentaerythritol having n of 1 to 3 and a condensate(s) thereof and the content of condensate(s) of pentaerythritol having n of 4 or higher (n ≥ 4) is 100% by mass). It is noted here that pentaerythritol has n of 1 (n = 1) and dipentaerythritol has n of 2 (n = 2).

From the standpoint of flame retardancy, the (poly)pentaerythritol mixture is preferably one which contains pentaerythritol having a degree of condensation, which is represented by n, of 1 to 3 (n = 1 to 3) and a condensate(s) thereof in a total of 10 to 30% by mass with respect to the total amount of the mixture, more preferably one containing 0 to 10% by mass of pentaerythritol having n of 1 (n = 1), whose total content of pentaerythritol having n of 1 to 3 (n = 1 to 3) and a condensate(s) thereof is 5 to 30% by mass, most preferably one containing 0 to 5% by mass of pentaerythritol having n of 1 (n = 1), whose total content of pentaerythritol having n of 1 to 3 (n = 1 to 3) and a condensate(s) thereof is 10 to 30% by mass.

Examples of the pentaerythritol and condensates thereof include compounds represented by the following Formula (4): 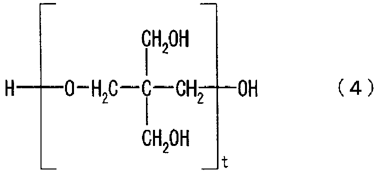 (wherein, t represents an integer of 1 or larger).

The (poly)pentaerythritol mixture may also contain, for example, a pentaerythritol condensate represented by the Formula (4) which has an ether bond in the molecule, a pentaerythritol condensate in which an intermediate methylol group(s) is/are ether-linked with other molecule(s), a pentaerythritol condensate in which molecules are linked in a mesh form, and/or a pentaerythritol condensate in which molecules are further linked to increase in size and form macrocyclic ether structures at various sites.

The (poly)pentaerythritol mixture is not particularly restricted and can be produced by a known method. For example, the (poly)pentaerythritol mixture can be produced by subjecting pentaerythritol and/or a pentaerythritol condensate(s) to a dehydration condensation reaction under heating, directly or in the presence of an appropriate catalyst and solvent.

Examples of the catalyst used for the production of the (poly)pentaerythritol mixture include inorganic acids and organic acids that are usually used in a dehydration condensation reaction of an alcohol. Examples of the inorganic acids include mineral acids such as phosphoric acid and sulfuric acid; acidic salts of these mineral acids; and solid acid catalysts such as clay minerals (e.g., montmorillonite), silica-alumina and zeolite. Examples of the organic acids include formic acid and p-toluenesulfonic acid.

The amount of the catalyst to be used is not particularly restricted and, when an aqueous acid catalyst is used, it can be used in such an amount that can maintain the pH in the reaction system during reaction to be lower than 7, preferably 5 or lower. Further, when a solid acid catalyst is used, usually, it can be used in an amount of 0.1 to 100% by mass with respect to the amount of pentaerythritol.

Examples of the solvent used for the production of the (poly)pentaerythritol mixture include hydrocarbons such as benzene, xylene, decalin and tetralin; ethers such as dioxane, tetrahydrofuran, ethyl ether, anisole, phenyl ether, diglyme, tetraglyme and 18-crown-6; ketones such as methyl acetate, ethyl butyrate, methyl benzoate and γ-butyrolactone; N-substituted amides such as N-methylpyrrolidin-one, N,N-dimethylacetamide, N-methylpiperidone and hexamethylphosphoric triamide; tertiary amines such as N,N-diethylaniline, N-methylmorpholine, pyridine and quinoline; sulfones such as sulfolane; sulfoxides such as dimethyl sulfoxide; urea derivatives such as 1,3-dimethyl-2-imidazolidinone; phosphine oxides such as tributylphosphine oxide; and silicone oils. These solvents may be dehydrated or hydrous.

The reaction temperature of the dehydration condensation under heating in the production of the (poly)pentaerythritol mixture is usually about 100 to 280°C, more preferably 150 to 240°C. When the reaction temperature is lower than 100°C, the progress of the reaction may be slow, whereas when the reaction temperature is higher than 280°C, it may be difficult to control the condensation reaction.

In the flame retardant composition of the present invention, the component (C) is contained in an amount of 0.5 to 15 parts by mass, preferably 2 to 12 parts by mass, more preferably 5 to 10 parts by mass, with respect to a total of 100 parts by mass of the components (A) and (B).

It is preferred that the flame retardant composition of the present invention further comprise zinc oxide, which is a flame retardant aid, as a component (D). This zinc oxide may be surface-treated as well. As the zinc oxide, a commercially available product can be used, and examples thereof include Zinc Oxide Type 1 (manufactured by Mitsui Mining & Smelting Co., Ltd.), partially coated-type Zinc Oxide (manufactured by Mitsui Mining & Smelting Co., Ltd.), NANOFINE 50 (ultra-fine zinc oxide particle having an average particle size of 0.02 µm; manufactured by Sakai Chemical Industry Co., Ltd.), and NANOFINE K (ultra-fine zinc oxide particle coated with zinc silicate, average particle size: 0.02 µm; manufactured by Sakai Chemical Industry Co., Ltd.).

The amount of zinc oxide contained as the component (D) is usually 0.01 to 10 parts by mass, preferably 0.5 to 10 parts by mass, more preferably 1.2 to 5 parts by mass, with respect to a total of 100 parts by mass of the components (A) and (B).

It is also preferred that the flame retardant composition of the present invention further comprise an anti-dripping agent as a component (E). Examples of the anti-dripping agent include fluorine-containing anti-dripping agents, silicon rubbers and layered silicates. Thereamong, fluorine-containing anti-dripping agents are preferred.

Specific examples of the fluorine-containing anti-dripping agents include fluorocarbon resins such as polytetrafluoroethylene, polyvinylidene fluoride and polyhexafluoropropylene; and alkali metal perfluoroalkanesulfonate compounds and alkaline earth metal perfluoroalkanesulfonate compounds, such as sodium perfluoromethanesulfonate, potassium perfluoro-n-butanesulfonate, potassium perfluoro-t-butanesulfonate, sodium perfluorooctanesulfonate and calcium perfluoro-2-ethylhexanesulfonate. Among these anti-dripping agents, polytetrafluoroethylene is most preferred because of its anti-dripping property.

Examples of the layered silicates include smectite-type clay minerals such as montmorillonite, saponite, hectorite, beidellite, stevensite and nontronite; vermiculite; halloysite; swellable mica; and talc, and those in which organic cations, quaternary ammonium cations or phosphonium cations are intercalated between layers can also be used.

The amount of the anti-dripping agent contained as the component (E) is usually 0.005 to 5 parts by mass, preferably 0.01 to 5 parts by mass, more preferably 0.05 to 3 parts by mass, still more preferably 0.1 to 1 part by mass, with respect to a total of 100 parts by mass of the components (A) and (B). When the amount of the anti-dripping agent is less than 0.005 parts by mass, the drip-inhibiting effect may not be sufficient, whereas when the amount is greater than 5 parts by mass, the resin properties may be deteriorated.

In the flame retardant composition of the present invention, in order to inhibit secondary aggregation during blending and improve the water resistance, a silicone oil may be incorporated as well. Examples of the silicone oil include dimethylsilicone oil in which the side chains and the terminals of polysiloxane are all methyl groups; methylphenylsilicone oil in which some of the side chains of polysiloxane are phenyl groups; methyl hydrogen silicone oil in which some of the side chains of polysiloxane are hydrogen; and copolymers of these silicone oils. Further, modified silicone oils in which an organic group(s) is/are introduced to some of the side chains and/or terminals of these silicone oils, for example, amine-modified, epoxy-modified, alicyclic epoxy-modified, carboxyl-modified, carbinol-modified, mercapto-modified, polyether-modified, long-chain alkyl-modified, fluoroalkyl-modified, higher fatty acid ester-modified, higher fatty acid amide-modified, silanol-modified, diol-modified, phenol-modified and/or aralkyl-modified silicone oils can also be used.

Specific examples of the silicone oil include: as dimethylsilicone oil, KF-96 (manufactured by Shin-Etsu Chemical Co., Ltd.), KF-965 (manufactured by Shin-Etsu Chemical Co., Ltd.) and KF-968 (manufactured by Shin-Etsu Chemical Co., Ltd.); and, as methyl hydrogen silicone oil or silicone oil having a methyl hydrogen polysiloxane structure, KF-99 (manufactured by Shin-Etsu Chemical Co., Ltd.), KF-9901 (manufactured by Shin-Etsu Chemical Co., Ltd.), HMS-151 (manufactured by Gelest Inc.), HMS-071 (manufactured by Gelest Inc.), HMS-301 (manufactured by Gelest Inc.) and DMS-H21 (manufactured by Gelest Inc.). Examples of the methylphenylsilicone oil include KF-50 (manufactured by Shin-Etsu Chemical Co., Ltd.), KF-53 (manufactured by Shin-Etsu Chemical Co., Ltd.), KF-54 (manufactured by Shin-Etsu Chemical Co., Ltd.) and KF-56 (manufactured by Shin-Etsu Chemical Co., Ltd.), and examples of an epoxy-modified product include X-22-343 (manufactured by Shin-Etsu Chemical Co., Ltd.), X-22-2000 (manufactured by Shin-Etsu Chemical Co., Ltd.), KF-101 (manufactured by Shin-Etsu Chemical Co., Ltd.), KF-102 (manufactured by Shin-Etsu Chemical Co., Ltd.) and KF-1001 (manufactured by Shin-Etsu Chemical Co., Ltd.). Examples of a carboxyl-modified product include X-22-3701E (manufactured by Shin-Etsu Chemical Co., Ltd.). Further, examples of a carbinol-modified product include X-22-4039 (manufactured by Shin-Etsu Chemical Co., Ltd.) and X-22-4015 (manufactured by Shin-Etsu Chemical Co., Ltd.), and examples of an amine-modified product include KF-393 (manufactured by Shin-Etsu Chemical Co., Ltd.).

In the flame retardant composition of the present invention, a silane coupling agent may be incorporated as well. The silane coupling agent is a compound having an organic functional group along with a hydrolysable group, and it is represented by, for example, a general formula A-(CH₂)ₖ-Si(OR)₃. In this formula, A represents an organic functional group; k represents a number of 1 to 3; and R represents a methyl group or an ethyl group. Examples of the organic group represented by A include an epoxy group, a vinyl group, a methacryl group, an amino group and a mercapto group. As the silane coupling agent to be used in the present invention, one which has an epoxy group is particularly preferred.

Further, in the flame retardant composition of the present invention, it is also preferred to incorporate a lubricant as required. Examples of such a lubricant include pure hydrocarbon-based lubricants such as liquid paraffins, natural paraffins, microwaxes, synthetic paraffins, low-molecular-weight polyethylenes and polyethylene waxes; halogenated hydrocarbon-based lubricants; fatty acid-based lubricants such as higher fatty acids and oxy fatty acids; fatty acid amide-based lubricants such as fatty acid amides and bis-fatty acid amides; ester-based lubricants such as lower alcohol esters of fatty acids, polyhydric alcohol esters of fatty acids (e.g., glyceride), polyglycol esters of fatty acids, and fatty alcohol esters of fatty acids (ester waxes); metal soaps; fatty alcohols; polyhydric alcohols; polyglycols; polyglycerols; partial esters of fatty acids and polyhydric alcohols; partial ester-based lubricants composed of fatty acid, polyglycol and polyglycerol; (meth)acrylate-based copolymers; silicone oils; and mineral oils.

In the flame retardant composition of the present invention, as required, one or more halogen-free organic or inorganic flame retardants or flame retardant aids can be further used in such a range that does not adversely affect the effects of the present invention. Examples of the flame retardants and flame retardant aids include triazine ring-containing compounds, metal hydroxides, phosphate-based flame retardants, condensed phosphate-based flame retardants, inorganic phosphorus-based flame retardants, dialkyl phosphinates, silicone-based flame retardants, metal oxides, boric acid compounds, expandable graphites, other inorganic flame retardant aids and other organic flame retardants.

Examples of the triazine ring-containing compounds include melamine, ammeline, benzoguanamine, acetoguanamine, phthalodiguanamine, melamine cyanurate, butylene diguanamine, norbornene diguanamine, methylene diguanamine, ethylene dimelamine, trimethylene dimelamine, tetramethylene dimelamine, hexamethylene dimelamine and 1,3-hexylene dimelamine.

Examples of the metal hydroxides include magnesium hydroxide, aluminum hydroxide, calcium hydroxide, barium hydroxide, zinc hydroxide and KISUMA 5A (trademark; magnesium hydroxide manufactured by Kyowa Chemical Industry Co., Ltd.).

Examples of the phosphate-based flame retardants include trimethyl phosphate, triethyl phosphate, tributyl phosphate, tributoxyethyl phosphate, tris-chloroethyl phosphate, tris-dichloropropyl phosphate, triphenyl phosphate, tricresyl phosphate, cresyldiphenyl phosphate, trixylenyl phosphate, octyldiphenyl phosphate, xylenyldiphenyl phosphate, tris-isopropylphenyl phosphate, 2-ethylhexyldiphenyl phosphate, t-butylphenyldiphenyl phosphate, bis(t-butylphenyl)phenyl phosphate, tris(t-butylphenyl)phosphate, isopropylphenyldiphenyl phosphate, bis(isopropylphenyl)diphenyl phosphate, and tris(isopropylphenyl)phosphate.

Examples of the condensed phosphate-based flame retardants include 1,3-phenylene-bis(diphenylphosphate), 1,3-phenylene-bis(dixylenylphosphate) and bisphenol A-bis(diphenylphosphate).

Examples of the inorganic phosphorus-based flame retardants include red phosphorus.

Examples of the dialkyl phosphinates include aluminum diethyl phosphinate and zinc diethyl phosphinate.

Examples of the above-described other inorganic flame retardant aids include inorganic compounds such as titanium oxide, aluminum oxide, magnesium oxide and hydrotalcite; and their surface-treated products. Specific examples thereof include various commercially available products, such as TIPAQUE R-680 (trademark; titanium oxide manufactured by Ishihara Sangyo Kaisha, Ltd.), KYOWA MAG 150 (trademark; magnesium oxide manufactured by Kyowa Chemical Industry Co., Ltd.), DHT-4A (hydrotalcite manufactured by Kyowa Chemical Industry Co., Ltd.) and ALCAMIZER 4 (trademark; zinc-modified hydrotalcite manufactured by Kyowa Chemical Industry Co., Ltd.).

In the frame retardant composition used in the present invention, as required, a phenolic antioxidant, a phosphorus-based antioxidant, a thioether-based antioxidant, an ultraviolet absorber, a hindered amine-based light stabilizer, an anti-aging agent and the like may be incorporated as well. These components may be blended with the flame retardant composition of the present invention in advance, or may be incorporated into a synthetic resin when the flame retardant composition is blended with the synthetic resin. It is preferred that the synthetic resin be stabilized by incorporating these components.

Examples of the phenolic antioxidant include 2,6-di-tert-butyl-p-cresol, 2,6-diphenyl-4-octadecyloxyphenol, distearyl(3,5-di-tert-butyl-4-hydroxybenzyl)phosphonate, 1,6-hexamethylene-bis[(3,5-di-tert-butyl-4-hydroxyphenyl)propionic acid amide], 4,4'-thiobis(6-tert-butyl-m-cresol), 2,2'-methylene-bis(4-methyl-6-tert-butylphenol), 2,2'-methylene-bis(4-ethyl-6-tert-butylphenol), 4,4'-butylidene-bis(6-tert-butyl-m-cresol), 2,2'-ethylidene-bis(4,6-di-tert-butylphenol), 2,2'-ethylidene-bis(4-sec-butyl-6-tert-butylphenol), 1,1,3-tris(2-methyl-4-hydroxy-5-tert-butylphenyl)butane, 1,3,5-tris(2,6-dimethyl-3-hydroxy-4-tert-butylbenzyl)isocyanurate, 1,3,5-tris(3,5-di-tert-butyl-4-hydroxybenzyl)isocyanurate, 1,3,5-tris(3,5-di-tert-butyl-4-hydroxybenzyl)-2,4,6-trimethylbenzene, 2-tert-butyl-4-methyl-6-(2-acryloyloxy-3-tert-butyl-5-methylbenzyl)phenol, stearyl(3,5-di-tert-butyl-4-hydroxyphenyl)propionate, tetrakis[3-(3,5-di-tert-butyl-4-hydroxyphenyl)propionic acid methyl]methane, thiodiethylene glycol-bis [(3,5 -di-tert-butyl-4-hydroxyphenyl)propionate], 1,6-hexamethylene-bis[(3,5-di-tert-butyl-4-hydroxyphenyl)propionate], bis [3,3 -bis(4-hydroxy-3 -tert-butylphenyl)butyric acid]glycol ester, bis[2-tert-butyl-4-methyl-6-(2-hydroxy-3-tert-butyl-5-methylbenzyl)phenyl]terephthalate, 1,3,5-tris[(3,5-di-tert-butyl-4-hydroxyphenyl)propionyloxyethyl]isocyanurate, 3,9-bis[1,1-dimethyl-2-{(3-tert-butyl-4-hydroxy-5-methylphenyl)propionyloxy}ethyl]-2,4,8,1 0-tetraoxaspiro[5,5]undecane, and triethylene glycol-bis[(3-tert-butyl-4-hydroxy-5-methylphenyl)propionate].

When blended into a synthetic resin, these phenolic antioxidants are used in an amount of preferably 0.001 to 5% by mass, more preferably 0.05 to 3% by mass, in the resulting synthetic resin composition.

Examples of the phosphorus-based antioxidant include trisnonylphenyl phosphite, tris[2-tert-butyl-4-(3-tert-butyl-4-hydroxy-5-methylphenylthio)-5-methylphenyl]phosphite, tridecyl phosphite, octyldiphenyl phosphite, di(decyl)monophenyl phosphite, di(tridecyl)pentaerythritol diphosphite, di(nonylphenyl)pentaerythritol diphosphite, bis(2,4-di-tert-butylphenyl)pentaerythritol diphosphite, bis(2,6-di-tert-butyl-4-methylphenyl)pentaerythritol diphosphite, bis(2,4,6-tri-tert-butylphenyl)pentaerythritol diphosphite, bis(2,4-dicumylphenyl)pentaerythritol diphosphite, tetra(tridecyl)isopropylidenediphenol diphosphite, tetra(tridecyl)-4,4'-n-butylidene-bis(2-tert-butyl-5-methylphenol)diphosphite, hexa(tridecyl)-1,1,3-tris(2-methyl-4-hydroxy-5-tert-butylphenyl)butane triphosphite, tetrakis(2,4-di-tert-butylphenyl)biphenylene diphosphonite, 9,10-dihydro-9-oxa-10-phosphaphenanthrene-10-oxide, 2,2'-methylene-bis(4,6-tert-butylphenyl)-2-ethylhexyl phosphite, 2,2'-methylene-bis(4,6-tert-butylphenyl)-octadecyl phosphite, 2,2'-ethylidene-bis(4,6-di-tert-butylphenyl)fluorophosphite, tris(2-[(2,4,8,10-tetrakis-tert-butyldibenzo[d,f][1,3,2]dioxaphosphepin-6-yl)oxy]ethyl)amine, and phosphite of 2-ethyl-2-butylpropylene glycol and 2,4,6-tri-tert-butylphenol. When blended into a synthetic resin, these phosphorus-based antioxidants are used in an amount of preferably 0.001 to 5% by mass, more preferably 0.05 to 3% by mass, in the resulting synthetic resin composition.

Examples of the thioether-based antioxidant include dialkyl thiodipropionates such as dilauryl thiodipropionate, dimyristyl thiodipropionate and distearyl thiodipropionate; and pentaerythritol tetra(β-alkylmercaptopropionic acid ester)s. When blended into a synthetic resin, these thioether-based antioxidants are used in an amount of preferably 0.001 to 5% by mass, more preferably 0.05 to 3% by mass, in the resulting synthetic resin composition.

Examples of the ultraviolet absorber include 2-hydroxybenzophenones such as 2,4-dihydroxybenzophenone, 2-hydroxy-4-methoxybenzophenone, 2-hydroxy-4-octoxybenzophenone and 5,5'-methylene-bis(2-hydroxy-4-methoxybenzophenone); 2-(2'-hydroxyphenyl)benzotriazoles such as 2-(2'-hydroxy-5'-methylphenyl)benzotriazole, 2-(2'-hydroxy-3',5'-di-tert-butylphenyl)-5-chlorobenzotriazole, 2-(2'-hydroxy-3'-tert-butyl-5'-methylphenyl)-5-chlorobenzotriazole, 2-(2'-hydroxy-5'-tert-octylphenyl)benzotriazole, 2-(2'-hydroxy-3',5'-dicumylphenyl)benzotriazole, 2,2'-methylene-bis(4-tert-octyl-6-(benzotriazolyl)phenol), 2-(2'-hydroxy-3'-tert-butyl-5'-carboxyphenyl)benzotriazole; benzoates such as phenyl salicylate, resorcinol monobenzoate, 2,4-di-tert-butylphenyl-3,5-di-tert-butyl-4-hydroxybenzoate, 2,4-di-tert-amylphenyl-3,5-di-tert-butyl-4-hydroxybenzoate and hexadecyl-3,5-di-tert-butyl-4-hydroxybenzoate; substituted oxanilides such as 2-ethyl-2'-ethoxyoxanilide and 2-ethoxy-4'-dodecyloxanilide; cyanoacrylates such as ethyl-α-cyano-β,β-diphenyl acrylate and methyl-2-cyano-3-methyl-3-(p-methoxyphenyl)acrylate; and triaryl triazines such as 2-(2-hydroxy-4-octoxyphenyl)-4,6-bis(2,4-di-tert-butylphenyl)-s-triazine, 2-(2-hydroxy-4-methoxyphenyl)-4,6-diphenyl-s-triazine and 2-(2-hydroxy-4-propoxy-5-methylphenyl)-4,6-bis(2,4-di-tert-butylphenyl)-s-triazine. When blended into a synthetic resin, these ultraviolet absorbers are used in an amount of preferably 0.001 to 5% by mass, more preferably 0.05 to 3% by mass, in the resulting synthetic resin composition.

Examples of the hindered amine-based light stabilizer include hindered amine compounds such as 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl)sebacate, bis(1,2,2,6,6-tetramethyl-4-piperidyl)sebacate, bis(1-oxtoxy-2,2,6,6-tetramethyl-4-piperidyl)sebacate, tetrakis(2,2,6,6-tetramethyl-4-piperidyl)-1,2,3,4-butane tetracarboxylate, tetrakis(1,2,2,6,6-pentamethyl-4-piperidyl)-1,2,3,4-butane tetracarboxylate, bis(2,2,6,6-tetramethyl-4-piperidyl)·di(tridecyl)-1,2,3,4-butane tetracarboxylate, bis(1,2,2,6,6-pentamethyl-4-piperidyl)·di(tridecyl)-1,2,3,4-butane tetracarboxylate, bis(1,2,2,4,4-pentamethyl-4-piperidyl)-2-butyl-2-(3,5-di-tert-butyl-4-hydroxybenzyl)malonate, 1-(2-hydroxyethyl)-2,2,6,6-tetramethyl-4-piperidinol/diethylsuccinate polycondensates, 1,6-bis(2,2,6,6-tetramethyl-4-piperidylamino)hexane/2,4-dichloro-6-morpholino-s-triazine polycondensates, 1,6-bis(2,2,6,6-tetramethyl-4-piperidylamino)hexane/2,4-dichloro-6-tert-octylamino-s-triazine polycondensates, 1,5,8,12-tetrakis[2,4-bis(N-butyl-N-(2,2,6,6-tetramethyl-4-piperidyl)amino)-s-triazine-6-yl]-1, 5,8,12-tetraazadodecane, 1,5,8,12-tetrakis[2,4-bis(N-butyl-N-(1,2,2,6,6-pentamethyl-4-piperidyl)amino)-s-triazine-6-yl ]-1,5,8,12-tetraazadodecane, 1,6,11-tris[2,4-bis(N-butyl-N-(2,2,6,6-tetramethyl-4-piperidyl)amino)-s-triazine-6-yl]aminoun decane and 1,6,11-tris[2,4-bis(N-butyl-N-(1,2,2,6,6-pentamethyl-4-piperidyl)amino)-s-triazine-6-yl]amin oundecane. When blended into a synthetic resin, these hindered amine-based light stabilizers are used in an amount of preferably 0.001 to 5% by mass, more preferably 0.05 to 3% by mass, in the resulting synthetic resin composition.

Examples of the anti-aging agent include naphthylamine-based anti-aging agents, diphenylamine-based anti-aging agents, p-phenyldiamine-based anti-aging agents, quinoline-based anti-aging agents, hydroquinone derivatives, monophenolic anti-aging agents, thiobisphenol-based anti-aging agents, hindered phenol-based anti-aging agents and phosphite-based anti-aging agents. When blended into a synthetic resin, these anti-aging agents are used in an amount of preferably 0.001 to 5% by mass, more preferably 0.05 to 3% by mass, in the resulting synthetic resin composition.

In the flame retardant composition of the present invention, a reinforcing material may also be incorporated as an optional component in such a range that does not adversely affect the effects of the present invention. These components may be incorporated into a synthetic resin when the flame retardant composition of the present invention is blended with the synthetic resin. As the reinforcing material, one which is normally used in the form of fibers, plate, particles or powder for reinforcement of a synthetic resin can be employed. Specific examples of such a reinforcing material include inorganic fibrous reinforcing materials such as glass fibers, asbestos fibers, carbon fibers, graphite fibers, metal fibers, potassium titanate whiskers, aluminum borate whiskers, magnesium-based whiskers, silicon-based whiskers, wollastonite, sepiolite, asbestos, slag fibers, zonolite, ellestadite, gypsum fibers, silica fibers, silica-alumina fibers, zirconia fibers, boron nitride fibers, silicon nitride fibers and boron fibers; organic fibrous reinforcing materials such as polyester fibers, nylon fibers, acrylic fibers, regenerated cellulose fibers, acetate fibers, kenaf, ramie, cotton, jute, hemp, sisal, flax, linen, silk, Manila hemp, sugarcane, wood pulp, wastepaper, recycled wastepaper and wool; plate-form and particle-form reinforcing materials such as glass flake, non-swelling mica, graphites, metal foils, ceramic beads, clay, mica, sericite, zeolite, bentonite, dolomite, kaolin, fine powder silicic acid, feldspar powder, potassium titanate, shirasu balloon, calcium carbonate, magnesium carbonate, barium sulfate, calcium oxide, aluminum oxide, titanium oxide, aluminum silicate, silicon oxide, gypsum, novaculite, dawsonite and white clay. These reinforcing materials may be coated or bundled with a thermoplastic resin such as an ethylene/vinyl acetate copolymer or a thermosetting resin such as an epoxy resin, or may be treated with a coupling agent such as aminosilane, epoxysilane, or the like.

In the flame retardant composition of the present invention, a nucleating agent may be further incorporated as an optional component in such a range that does not adversely affect the effects of the present invention. As the nucleating agent, one which is generally used as a nucleating agent of a polymer can be employed as appropriate and, in the present invention, any of inorganic nucleating agents and organic nucleating agents can be used. These components may be incorporated into a synthetic resin when the flame retardant composition of the present invention is blended with the synthetic resin.

Specific examples of the inorganic nucleating agents include kaolinite, synthetic mica, clay, zeolite, silica, graphite, carbon black, magnesium oxide, titanium oxide, calcium sulfide, boron nitride, calcium carbonate, barium sulfate, aluminum oxide, neodymium oxide, and metal salts of phenylphosphonate and the like. These inorganic nucleating agents may also be modified with an organic substance in order to improve their dispersion in the composition.

Specific examples of the organic nucleating agents include metal salts of organic carboxylic acids, such as sodium benzoate, potassium benzoate, lithium benzoate, calcium benzoate, magnesium benzoate, barium benzoate, lithium terephthalate, sodium terephthalate, potassium terephthalate, calcium oxalate, sodium laurate, potassium laurate, sodium myristate, potassium myristate, calcium myristate, sodium octacosanate, calcium octacosanate, sodium stearate, potassium stearate, lithium stearate, calcium stearate, magnesium stearate, barium stearate, sodium montanate, calcium montanate, sodium toluate, sodium salicylate, potassium salicylate, zinc salicylate, aluminum dibenzoate, potassium dibenzoate, lithium dibenzoate, sodium β-naphthalate and sodium cyclohexane carboxylate; organic sulfonates such as sodium p-toluenesulfonate and sodium sulfoisophthalate; carboxylic acid amides such as stearic acid amide, ethylenebis lauric acid amide, palmitic acid amide, hydroxystearic acid amide, erucic acid amide and trimesic acid tris(t-butylamide); benzylidene sorbitol and derivatives thereof; metal salts of phosphorus compounds such as sodium-2,2'-methylene-bis(4,6-di-t-butylphenyl)phosphate; and 2,2-methylbis(4,6-di-t-butylphenyl)sodium.

In the flame-retardant polyolefin-based resin composition of the present invention, a plasticizer may also be incorporated as an optional component in such a range that does not adversely affect the effects of the present invention. As the plasticizer, one which is generally used as a plasticizer of a polymer can be employed as appropriate, and examples thereof include polyester-based plasticizers, glycerin-based plasticizers, polyvalent carboxylic acid ester-based plasticizers, polyalkylene glycol-based plasticizers and epoxy-based plasticizers. These components may be incorporated into a synthetic resin when the flame retardant composition of the present invention is blended with the synthetic resin.

Specific examples of the polyester-based plasticizers include polyesters that are composed of an acid component, such as adipic acid, sebacic acid, terephthalic acid, isophthalic acid, naphthalenedicarboxylic acid, diphenyldicarboxylic acid or rosin, and a diol component such as propylene glycol, 1,3-butanediol, 1,4-butanediol, 1,6-hexane diol, ethylene glycol or diethylene glycol; and polyesters composed of a hydroxycarboxylic acid such as polycaprolactone. The terminals of these polyesters may be blocked with a monofunctional carboxylic acid, a monofunctional alcohol, an epoxy compound or the like.

Specific examples of the glycerin-based plasticizers include glycerin monoacetomonolaurate, glycerin diacetomonolaurate, glycerin monoacetomonostearate, glycerin diacetomonooleate and glycerin monoacetomonomontanate. Specific examples of the polyvalent carboxylic acid ester-based plasticizers include phthalates such as dimethyl phthalate, diethyl phthalate, dibutyl phthalate, dioctyl phthalate, diheptyl phthalate, dibenzyl phthalate and butyl benzyl phthalate; trimellitates such as tributyl trimellitate, trioctyl trimellitate and trihexyl trimellitate; adipates such as diisodecyl adipate, n-octyl-n-decyl adipate, methyl diglycol butyl diglycol adipate, benzyl methyl diglycol adipate, and benzyl butyl diglycol adipate; citrates such as acetyl triethyl citrate and acetyl tributyl citrate; azelates such as di-2-ethylhexyl azelate; and sebacates such as dibutyl sebacate and di-2-ethylhexyl sebacate.

Specific examples of the polyalkylene glycol-based plasticizers include polyalkylene glycols such as polyethylene glycols, polypropylene glycols, poly(ethylene oxide-propylene oxide) block and/or random copolymers, polytetramethylene glycols, ethylene oxide addition polymers of bisphenols, propylene oxide addition polymers of bisphenols, and tetrahydrofuran addition polymers of bisphenols; and terminal-blocked compounds thereof such as terminal epoxy-modified compounds, terminal ester-modified compounds and terminal ether-modified compounds.

The term "epoxy-based plasticizer" generally refers to epoxy triglyceride composed of alkyl epoxy stearate and soybean oil; however, in addition thereto, a so-called epoxy resin, which is produced using bisphenol A and epichlorohydrin as main materials, can also be used.

Specific examples of other plasticizers include benzoates of aliphatic polyols, such as neopentyl glycol dibenzoate, diethylene glycol dibenzoate and triethylene glycol di-2-ethyl butyrate; fatty acid amides such as stearic acid amide; aliphatic carboxylates such as butyl oleate; oxy acid esters such as methyl acetyl ricinoleate and butyl acetyl ricinoleate; pentaerythritol; various sorbitols; polyacrylates; and paraffins.

When a plasticizer is used in the present invention, the above-described plasticizers may be used individually, or two or more thereof may be used in combination.

In addition, in the flame retardant composition of the present invention, as required, an additive(s) usually used in a synthetic resin, such as a cross-linking agent, an antistatic agent, a metal soap, a filler, an anti-fogging agent, a plate-out inhibitor, a surface treatment agent, a fluorescent agent, an antifungal agent, a disinfectant, a foaming agent, a metal inactivator, a mold-releasing agent, a pigment and/or a processing aid, can be incorporated in such a range that does not adversely affect the effects of the present invention.

These components may be incorporated into a synthetic resin when the flame retardant composition of the present invention is blended with the synthetic resin.

The flame retardant composition of the present invention is effective in flame retardation of a synthetic resin, and it is incorporated into a synthetic resin to be preferably used as a flame-retardant synthetic resin composition.

Specific examples of a synthetic resin to be flame-retarded by the flame retardant composition of the present invention include α-olefin polymers such as polypropylenes, high-density polyethylenes, low-density polyethylenes, linear low-density polyethylenes, cross-linked polyethylenes, ultrahigh-molecular-weight polyethylenes, polybutene-1 and poly-3-methylpentene; polyolefins and copolymers thereof, such as ethylene-vinyl acetate copolymers, ethylene-ethyl acrylate copolymers and ethylene-propylene copolymers; halogen-containing resins, such as polyvinyl chloride, polyvinylidene chloride, chlorinated polyethylene, chlorinated polypropylene, polyvinylidene fluoride, chlorinated rubbers, vinyl chloride-vinyl acetate copolymers, vinyl chloride-ethylene copolymers, vinyl chloride-vinylidene chloride copolymers, vinyl chloride-vinylidene chloride-vinyl acetate ternary copolymers, vinyl chloride-acrylate copolymers, vinyl chloride-maleate copolymers, and vinyl chloride-cyclohexylmaleimide copolymers; petroleum resins; coumarone resins; polystyrenes; polyvinyl acetates; acrylic resins; copolymers (e.g., AS resins, ABS resins, ACS resins, MBS resins, SBS resins and heat-resistant ABS resins) that are composed of styrene and/or α-methylstyrene with other monomer (e.g., maleic anhydride, phenyl maleimide, methyl methacrylate, butadiene or acrylonitrile); polymethyl methacrylates; polyvinyl alcohols; polyvinyl formals; polyvinyl butyrals; aromatic polyesters, including polyalkylene terephthalates such as polyethylene terephthalate, polybutylene terephthalate and polycyclohexane dimethylene terephthalate, and polyalkylene naphthalates such as polyethylene naphthalate and polybutylene naphthalate, and linear polyesters such as polytetramethylene terephthalate; degradable aliphatic polyesters such as polyhydroxy butyrate, polycaprolactone, polybutylene succinate, polyethylene succinate, polylactic acid resin, polymalic acid, polyglycolic acid, polydioxane and poly(2-oxetanone); thermoplastic resins and blends thereof, such as polyamides (e.g., polyphenylene oxide, polycaprolactam and polyhexamethylene adipamide), polycarbonates, branched polycarbonates, polyacetals, polyphenylene sulfides, polyurethanes and cellulose-based resins; thermosetting resins such as phenol resins, urea resins, melamine resins, epoxy resins and unsaturated polyester resins; fluorocarbon resins; silicone resins; silicone rubber polyether sulfones; polysulfones; polyphenylene ethers; polyether ketones; polyether ether ketones; and liquid crystal polymers. Further, the synthetic resin may also be an elastomer, such as an isoprene rubber, a butadiene rubber, an acrylonitrile-butadiene copolymer rubber, a styrene-butadiene copolymer rubber, a fluorine rubber, a silicone rubber, an olefin-based elastomer, a styrene-based elastomer, a polyester-based elastomer, a nitrile-based elastomer, a nylon-based elastomer, a vinyl chloride-based elastomer, a polyamide-based elastomer or a polyurethane-based elastomer.

Two or more of these synthetic resins may be used in combination. Further, the synthetic resins may be alloyed as well.

In the present invention, these synthetic resins can be used regardless of the molecular weight, polymerization degree, density, softening point, ratio of insoluble component(s) in a solvent, degree of stereoregularity, presence or absence of a catalyst residue, type and blend ratio of each material monomer, type of the polymerization catalyst (for example, a Ziegler catalyst or a metallocene catalyst), and the like.

Among these synthetic resins, polyolefin-based resins are particularly preferred. Examples of the polyolefin-based resins include α-olefin polymers such as low-density polyethylenes, linear low-density polyethylenes, high-density polyethylenes, isotactic polypropylenes, syndiotactic polypropylenes, hemi-isotactic polypropylenes, polybutenes, cycloolefin polymers, stereoblock polypropylenes, poly-3-methyl-1-butene, poly-3-methyl-1-pentene and poly-4-methyl-1-pentene; and α-olefin copolymers such as ethylene-propylene block or random copolymers, ethylene-methyl methacrylate copolymers, and ethylene-vinyl acetate copolymers.

In the flame-retardant polyolefin-based resin composition of the present invention, the total content of the components (A), (B) and (C) is preferably not less than 15% by mass but less than 30% by mass, more preferably not less than 15% by mass but less than 25% by mass. When the total content is less than 15% by mass, sufficient flame retardancy may not be exerted, whereas when the total content is 30% by mass or more, the physical properties inherent to the resin may be impaired.

A molded article having excellent flame retardancy can be obtained by molding the flame-retardant synthetic resin composition of the present invention. The molding method is not particularly restricted, and examples thereof include extrusion processing, calender processing, injection molding, rolling, compression molding and blow molding. Molded articles of various shapes, such as resin plates, sheets, films and special shape articles, can be produced by these methods.

The resin composition can be used for housings (e.g., frames, casings, covers and exteriors) and components of electric motorcars, machines, electric and electronic appliances, OA equipments and the like as well as automobile interior and exterior materials or the like, and can be suitably used in applications where the UL94 5VA standard is required to be satisfied.

The flame-retardant synthetic resin composition of the present invention and molded articles thereof can be used in a wide range of industrial fields, including the fields of electric/electronic communication, agriculture/forestry/fisheries, mining, construction, food, fiber, clothing, health care, coal, petroleum, rubber, leather, automobiles, precision instruments, lumber, building materials, civil engineering, furnitures, printing and musical instruments. More specific examples of the applications where the flame-retardant synthetic resin composition of the present invention and molded articles thereof can be used include office work automation equipments, such as printers, personal computers, word processors, keyboards, PDA (Personal Digital Assistant) devices, telephones, copy machines, facsimiles, ECRs (electronic cash registers), electronic calculators, electronic organizers, cards, holders and stationeries; household electric appliances, such as laundry machines, refrigerators, vacuum cleaners, microwave ovens, lighting equipments, game machines, irons and kotatsu; audio and visual devices, such as televisions, video tape recorders, video cameras, radio-casette players, tape recorders, mini discs, CD players, speakers and liquid crystal displays; electric and electronic components, such as connectors, relays, capacitors, switches, printed circuit boards, coil bobbins, semiconductor sealing materials, LED sealing materials, electric wires, cables, transformers, deflection yokes, distribution boards and clocks; housings (e.g., frames, casings, covers and exteriors) and components of communication equipments, OA equipments and the like; and automobile interior and exterior materials.

Furthermore, the flame-retardant synthetic resin composition of the present invention and molded articles thereof can also be used in other various applications, including materials of cars, hybrid cars, electric cars, vehicles, ships, airplanes, buildings and residential homes as well as materials for construction and civil engineering, such as seats (stuffing, cover materials and the like), belts, ceiling cover, convertible tops, armrests, door trims, rear package trays, carpets, mats, sun visors, wheel covers, mattress covers, air-bags, insulating materials, straps, strap belts, wire coating materials, electric insulating materials, paints, coating materials, veneer materials, floor materials, baffle walls, carpets, wallpapers, wall decorating materials, exterior materials, interior materials, roof materials, deck materials, wall materials, pillar materials, floor boards, fence materials, framing and moulding materials, window and door-shaping materials, shingle boards, sidings, terraces, balconies, soundproof boards, thermal insulating boards and window materials; and household articles and sporting goods, such as clothing materials, curtains, sheets, plywood boards, synthetic fiber boards, rugs, doormats, leisure sheets, buckets, hoses, containers, eye glasses, bags, casings, snow goggles, ski boards, rackets, tents and musical instruments.

### EXAMPLES

The present invention will now be described in more detail by way of examples thereof. However, the present invention is not restricted to the following examples by any means. It is noted here that the formulations shown in Tables 1 to 3 and 9 are all based on parts by mass.

### [Examples 1 to 28, 67 to 78, and Comparative Examples 1 to 6]

Components (A) and (B) were produced by the following methods.

### [Production Example 1]

### Component (A): Melamine Pyrophosphate

Melamine pyrophosphate was produced by allowing pyrophosphoric acid and melamine to react at a molar ratio of 1:2.

### [Production Example 2]

### Component (B): Piperazine Pyrophosphate

Piperazine pyrophosphate was produced by allowing pyrophosphoric acid and piperazine to react at a molar ratio of 1:1.

Flame retardant compositions were prepared in accordance with the respective formulations shown in Tables 1, 2 and 9. Flame retardant compositions of Comparative Examples were also prepared in the same manner in accordance with the respective formulations shown in Table 3.

### [Examples 29 to 56 and Comparative Examples 7 to 18]

To a polypropylene resin composition obtained by blending 70 parts by mass of a polypropylene (melt flow rate = 8 g/10 min) with 0.1 parts by mass of calcium stearate (lubricant), 0.1 parts by mass of tetrakis[3-(3,5-di-tert-butyl-4-hydroxyphenyl)propionic acid methyl]methane (phenolic antioxidant), 0.1 parts by mass of tris(2,4-di-tert-butylphenyl)phosphite (phosphorus-based antioxidant) and 0.3 parts by mass of glycerin monostearate (lubricant), the flame retardant compositions obtained in Examples 1 to 28 were each added in accordance with the respective ratios (% by mass) shown in Tables 4 and 5, thereby obtaining flame-retardant synthetic resin compositions. Incidentally, the flame retardant compositions were designated as follows: the flame retardant composition obtained in Example 1 was designated as "flame retardant composition-1", the flame retardant composition obtained in Example 2 was designated as "flame retardant composition-2", and other flame retardant compositions were sequentially designated in the same manner up to "flame retardant composition-28".

Further, the flame retardant composition obtained in Comparative Example 1 was designated as "comparative flame retardant composition-1", the flame retardant composition obtained in Comparative Example 2 was designated as "comparative flame retardant composition-2", and the flame retardant compositions obtained in other Comparative Examples were sequentially designated in the same manner up to "comparative flame retardant composition-6". These comparative flame retardant compositions obtained in the respective Comparative Examples have the formulations shown in Table 6.

The thus obtained flame-retardant synthetic resin compositions were each extruded at 200 to 230°C to produce a pellet, which was subsequently injection-molded at 200°C to obtain a test piece of 127 mm in length, 12.7 mm in width and 1.6 mm in thickness. As a flame retardancy test, this test piece was subjected to UL-94V test in accordance with the test method described below. The results thereof are shown in Tables 4 and 5.

In the same manner, test pieces were prepared from the synthetic resin compositions obtained in Comparative Examples and subjected to UL-94V test. The results thereof are shown in Table 6.

In addition, for the thus obtained flame-retardant synthetic resin compositions, the tensile strength and the Charpy impact strength were measured by the test methods described below. The results thereof are shown in Tables 4 and 5. In the same manner, these properties were also measured for Comparative Examples. The results thereof are shown in Table 6.

### [Examples 57 to 60 and Comparative Examples 19 to 22]

In accordance with Table 7, flame-retardant synthetic resin compositions containing the respective flame retardant compositions were obtained in the same manner as in Example 29, except that 70 parts by mass of a high-density polyethylene (melt flow rate = 12 g/10 min) was used in place of 70 parts by mass of the polypropylene (melt flow rate = 8 g/10 min). The thus obtained flame-retardant synthetic resin compositions were each extruded at 200 to 230°C to produce a pellet, which was subsequently injection-molded at 200°C to obtain a test piece of 127 mm in length, 12.7 mm in width and 1.6 mm in thickness. As a flame retardancy test, this test piece was subjected to UL-94V test in accordance with the test method described below. The results thereof are shown in Table 7. In the same manner, test pieces were prepared from the synthetic resin compositions obtained in Comparative Examples and subjected to UL-94V test. The results thereof are also shown in Table 7.

### [Examples 61 to 66 and Comparative Examples 23 to 28]

In accordance with Table 8, flame-retardant synthetic resin compositions containing the respective flame retardant compositions were obtained in the same manner as in Example 29, except that 35 parts by mass of a polypropylene (melt flow rate = 5 g/10 min) and 35 parts by mass of a hydrogenated styrenic thermoplastic elastomer (Tuftec 1062, manufactured by Asahi Kasei Chemicals Corporation) were used in place of 70 parts by mass of the polypropylene (melt flow rate = 8 g/10 min). The thus obtained flame-retardant synthetic resin compositions were each extruded at 200 to 230°C to produce a pellet, which was subsequently injection-molded at 200°C to obtain a test piece of 127 mm in length, 12.7 mm in width and 1.6 mm in thickness. As a flame retardancy test, this test piece was subjected to UL-94V test in accordance with the test method described below. The results thereof are shown in Table 8. In the same manner, test pieces were prepared from the synthetic resin compositions obtained in Comparative Examples and subjected to UL-94V test. The results thereof are also shown in Table 8.

### <Flame Retardancy UL-94V Test Method>

Each test piece of 127 mm in length, 12.7 mm in width and 1.6 mm in thickness was held vertically and a burner flame was brought into contact with the lower end of the test piece for 10 seconds. Then, the flame was removed and the time required for the flame ignited on the test piece to be extinguished was measured. Next, simultaneously with the flame extinction, a flame was again brought into contact with the test piece for 10 seconds, and the time required for the flame ignited on the test piece to be extinguished was measured in the same manner as in the first measurement. In addition, at the same time, it was also evaluated whether or not a piece of cotton placed under the test piece was ignited by cinders falling from the test piece.

Based on the combustion time after the first and second contacts with flame, the presence or absence of ignition of the piece of cotton and the like, the condition of the combustion was rated in accordance with the UL-94V standard. The combustion rating of V-0 represents the highest level of flame retardancy, followed by the ratings of V-1 and V-2 that represent lower levels of flame retardancy. When the condition did not correspond to any of the ratings V-0 to V-2, it was indicated as "NR".

### <Measurement Method of Tensile Strength>

The tensile strength was measured in accordance with ISO527.

### <Measurement Method of Charpy Impact Strength>

The Charpy impact strength was measured in accordance with ISO179-1 (with notch).

**[Table 1]**

| Formulation | Example | | | | | | | | | | | | | |
|---|---|---|---|---|---|---|---|---|---|---|---|---|---|---|
| | 1 | 2 | 3 | 4 | 5 | 6 | 7 | 8 | 9 | 10 | 11 | 12 | 13 | 14 |
| Component (A) Melamine pyrophosphate | 40 | 40 | 40 | 40 | 40 | 40 | 40 | 40 | 30 | 30 | 30 | 30 | 20 | 50 |
| Component (B) Piperazine pyrophosphate | 60 | 60 | 60 | 60 | 60 | 60 | 60 | 60 | 70 | 70 | 70 | 70 | 80 | 50 |
| Component (C) Dipentaerythritol | 5 | 8 | 3 | 5 | 5 | 5 | 3 | 3 | 5 | 5 | 5 | 5 | 5 | 5 |
| Component (D) Zinc oxide | | | | 5 | | 5 | 5 | 5 | | 5 | | 5 | | 5 |
| Component (E) Polytetrafluoroethylene | | | | | 0.2 | 0.2 | | 0.2 | | | 0.2 | 0.2 | | 0.2 |

**[Table 2]**

| Formulation | Example | | | | | | | | | | | | | |
|---|---|---|---|---|---|---|---|---|---|---|---|---|---|---|
| | 15 | 16 | 17 | 18 | 19 | 20 | 21 | 22 | 23 | 24 | 25 | 26 | 27 | 28 |
| Component (A) Melamine pyrophosphate | 40 | 40 | 40 | 40 | 40 | 40 | 40 | 40 | 30 | 30 | 30 | 30 | 20 | 50 |
| Component (B) Piperazine pyrophosphate | 60 | 60 | 60 | 60 | 60 | 60 | 60 | 60 | 70 | 70 | 70 | 70 | 80 | 50 |
| Component (C) (Poly)pentaerythritol mixture^{* 1} | 5 | 8 | 3 | 5 | 5 | 5 | 3 | 3 | 5 | 5 | 5 | 5 | 5 | 5 |
| Component (D) Zinc oxide | | | | 5 | | 5 | 5 | 5 | | 5 | | 5 | | 5 |
| Component (E) Polytetrafluoroethylene | | | | | 0.2 | 0.2 | | 0.2 | | | 0.2 | 0.2 | | 0.2 |

| | | | | | | | | | | | | | | |
|---|---|---|---|---|---|---|---|---|---|---|---|---|---|---|
| ^{*1}: With the degree of condensation of pentaerythritol being represented by n, n = 1, n = 2, n = 3 and n ≥ 4 correspond to mixtures of pentaerythritol and its condensate that have a degree of condensation of pentaerythritol of 4.4% by mass, 5.1% by mass, 2.6% by mass and 87.9% by mass, respectively. | | | | | | | | | | | | | | |

**[Table 3]**

| Formulation | | Comparative Example | | | | | |
|---|---|---|---|---|---|---|---|
| | | 1 | 2 | 3 | 4 | 5 | 6 |
| Component (A) Melamine pyrophosphate | | 40 | 100 | | 100 | | 40 |
| Component (B) Piperazine pyrophosphate | | 60 | | 100 | | 100 | 60 |
| Component (C) | Dipentaerythritol | | 5 | 5 | | | |
| | (Poly)pentaerythritol mixture | | | | 5 | 5 | |
| Component (D) Zinc oxide | | | | | | | 5 |

**[Table 4]**

| Formulation | Example | | | | | | | | | | | | | |
|---|---|---|---|---|---|---|---|---|---|---|---|---|---|---|
| | 29 | 30 | 31 | 32 | 33 | 34 | 35 | 36 | 37 | 38 | 39 | 40 | 41 | 42 |
| Flame retardant composition-1 | 24 | | | | | | | | | | | | | |
| Flame retardant composition-2 | | 24 | | | | | | | | | | | | |
| Flame retardant composition-3 | | | 24 | | | | | | | | | | | |
| Flame retardant composition-4 | | | | 21 | | | | | | | | | | |
| Flame retardant composition-5 | | | | | 20 | | | | | | | | | |
| Flame retardant composition-6 | | | | | | 17 | | | | | | | | |
| Flame retardant composition-7 | | | | | | | 21 | | | | | | | |
| Flame retardant composition-8 | | | | | | | | 17 | | | | | | |
| Flame retardant composition-9 | | | | | | | | | 24 | | | | | |
| Flame retardant composition-10 | | | | | | | | | | 21 | | | | |
| Flame retardant composition-11 | | | | | | | | | | | 20 | | | |
| Flame retardant composition-12 | | | | | | | | | | | | 17 | | |
| Flame retardant composition-13 | | | | | | | | | | | | | 24 | |
| Flame retardant composition-14 | | | | | | | | | | | | | | 17 |
| Flame retardancy test: UL-94V (1.6 mm) | V-0 | V-0 | V-0 | V-0 | V-0 | V-0 | V-0 | V-0 | V-0 | V-0 | V-0 | V-0 | V-0 | V-0 |
| Tensile strength (MPa) | 23.9 | 21.8 | 23.8 | 23.6 | 23.6 | 23.2 | 23.6 | 23.2 | 23.8 | 23.7 | 23.5 | 23.1 | 23.8 | 23.2 |
| Charpv impact strength (kJ/m²) | 4.9 | 4.7 | 4.7 | 4.6 | 4.2 | 4.0 | 4.5 | 4.0 | 4.8 | 4.6 | 4.1 | 3.9 | 4.8 | 4.0 |

**[Table 5]**

| Formulation | Example | | | | | | | | | | | | | |
|---|---|---|---|---|---|---|---|---|---|---|---|---|---|---|
| | 43 | 44 | 45 | 46 | 47 | 48 | 49 | 50 | 51 | 52 | 53 | 54 | 55 | 56 |
| Flame retardant composition-15 | 24 | | | | | | | | | | | | | |
| Flame retardant composition-16 | | 24 | | | | | | | | | | | | |
| Flame retardant composition-17 | | | 24 | | | | | | | | | | | |
| Flame retardant composition-18 | | | | 21 | | | | | | | | | | |
| Flame retardant composition-19 | | | | | 20 | | | | | | | | | |
| Flame retardant composition-20 | | | | | | 17 | | | | | | | | |
| Flame retardant composition-21 | | | | | | | 21 | | | | | | | |
| Flame retardant composition-22 | | | | | | | | 17 | | | | | | |
| Flame retardant composition-23 | | | | | | | | | 24 | | | | | |
| Flame retardant composition-24 | | | | | | | | | | 21 | | | | |
| Flame retardant composition-25 | | | | | | | | | | | 20 | | | |
| Flame retardant composition-26 | | | | | | | | | | | | 17 | | |
| Flame retardant composition-27 | | | | | | | | | | | | | 24 | |
| Flame retardant composition-28 | | | | | | | | | | | | | | 17 |
| Flame retardancy test: UL-94V (1.6 mm) | V-0 | V-0 | V-0 | V-0 | V-0 | V-0 | V-0 | V-0 | V-0 | V-0 | V-0 | V-0 | V-0 | V-0 |
| Tensile strength (MPa) | 24.0 | 23.9 | 23.8 | 23.6 | 23.6 | 23.2 | 23.7 | 23.2 | 23.8 | 23.8 | 23.5 | 23.2 | 23.8 | 23.2 |
| Charpy impact strength (kJ/m²) | 4.9 | 4.7 | 4.6 | 4.6 | 4.2 | 3.9 | 4.5 | 4.0 | 4.7 | 4.5 | 4.1 | 3.9 | 4.8 | 4.0 |

**[Table 6]**

| Formulation | Comparative Example | | | | | | | | | | | |
|---|---|---|---|---|---|---|---|---|---|---|---|---|
| | 7 | 8 | 9 | 10 | 11 | 12 | 13 | 14 | 15 | 16 | 17 | 18 |
| Comparative flame retardant composition-1 | 24 | 26 | | | | | | | | | | |
| Comparative flame retardant composition-2 | | | 24 | 28 | | | | | | | | |
| Comparative flame retardant composition-3 | | | | | 24 | 28 | | | | | | |
| Comparative flame retardant composition-4 | | | | | | | 24 | 28 | | | | |
| Comparative flame retardant composition-5 | | | | | | | | | 24 | 28 | | |
| Comparative flame retardant composition-6 | | | | | | | | | | | 21 | 25 |
| Flame retardancy test: UL-94V (1.6 mm) | V-2 | V-2 | NR | NR | NR | NR | NR | NR | NR | NR | V-2 | V-2 |
| Tensile strength (MPa) | 22.9 | 23.1 | 23.7 | 23.9 | 23.7 | 24.0 | 23.6 | 23.9 | 23.7 | 23.9 | 22.8 | 23.0 |
| Charpy impact strength (kJ/m²) | 4.9 | 4.7 | 4.9 | 4.8 | 4.9 | 4.7 | 4.9 | 4.7 | 4.9 | 4.7 | 4.9 | 4.7 |

**[Table 7]**

| Formulation | Example | | | | Comparative Example | | | |
|---|---|---|---|---|---|---|---|---|
| | 57 | 58 | 59 | 60 | 19 | 20 | 21 | 22 |
| Flame retardant composition-1 | 27 | | | | | | | |
| Flame retardant composition-4 | | 25 | | | | | | |
| Flame retardant composition-15 | | | 27 | | | | | |
| Flame retardant composition-18 | | | | 25 | | | | |
| Comparative flame retardant composition-1 | | | | | 29 | 31 | | |
| Comparative flame retardant composition-6 | | | | | | | 25 | 27 |
| Flame retardancy test: UL-94V (1.6 mm) | V-0 | V-0 | V-0 | V-0 | NR | V-2 | NR | V-2 |

**[Table 8]**

| Formulation | Example | | | | | | Comparative Example | | | | | |
|---|---|---|---|---|---|---|---|---|---|---|---|---|
| | 61 | 62 | 63 | 64 | 65 | 66 | 23 | 24 | 25 | 26 | 27 | 28 |
| Flame retardant composition-1 | 27 | | | | | | | | | | | |
| Flame retardant composition-2 | | 27 | | | | | | | | | | |
| Flame retardant composition-3 | | | 27 | | | | | | | | | |
| Flame retardant composition-4 | | | | 25 | | | | | | | | |
| Flame retardant composition-15 | | | | | 27 | | | | | | | |
| Flame retardant composition-18 | | | | | | 25 | | | | | | |
| Comparative flame retardant composition-1 | | | | | | | 27 | 29 | 31 | | | |
| Comparative flame retardant composition-6 | | | | | | | | | | 25 | 31 | 37 |
| Flame retardancy test: UL-94V (1.6 mm) | V-0 | V-0 | V-0 | V-0 | V-0 | V-0 | NR | NR | V-2 | NR | NR | V-2 |

**[Table 9]**

| Formulation | | Example | | | | | | | | | | | |
|---|---|---|---|---|---|---|---|---|---|---|---|---|---|
| | | 67 | 68 | 69 | 70 | 71 | 72 | 73 | 74 | 75 | 76 | 77 | 78 |
| Component (A) Melamine pyrophosphate | | 40 | 40 | 40 | 40 | 40 | 40 | 40 | 40 | 40 | 40 | 40 | 40 |
| Component (B) Piperazine pyrophosphate | | 60 | 60 | 60 | 60 | 60 | 60 | 60 | 60 | 60 | 60 | 60 | 60 |
| Component (C) | THEIC^{*2} | 5 | 8 | 3 | 5 | 5 | 5 | | | | | | |
| | Sorbitol | | | | | | | 5 | 8 | 3 | 5 | 5 | 5 |
| Component (D) Zinc oxide | | | | | 5 | | 5 | | | | 5 | | 5 |
| Component (E) Polytetrafluoroethylene | | | | | | 0.2 | 0.2 | | | | | 0.2 | 0.2 |

| | | | | | | | | | | | | | |
|---|---|---|---|---|---|---|---|---|---|---|---|---|---|
| ^{*2}: 1,3,5-tris(2-hydroxyethyl)isocyanurate | | | | | | | | | | | | | |

### [Examples 79 to 84 and Comparative Examples 19 to 22]

In accordance with Table 10, flame-retardant synthetic resin compositions containing the respective flame retardant compositions were obtained in the same manner as in Example 29, except that 70 parts by mass of a high-density polyethylene (melt flow rate = 12 g/10 min) was used in place of 70 parts by mass of the polypropylene (melt flow rate = 8 g/10 min). The thus obtained flame-retardant synthetic resin compositions were each extruded at 200 to 230°C to produce a pellet, which was subsequently injection-molded at 200°C to obtain a test piece of 127 mm in length, 12.7 mm in width and 1.6 mm in thickness. As a flame retardancy test, this test piece was subjected to UL-94V test in accordance with the above-described test method. The results thereof are shown in Table 10. In the same manner, test pieces were prepared from the synthetic resin compositions obtained in Comparative Examples and subjected to UL-94V test. The results thereof are also shown in Table 10.

**[Table 10]**

| Formulation | Example | | | | | | Comparative Example | | | |
|---|---|---|---|---|---|---|---|---|---|---|
| | 79 | 80 | 81 | 82 | 83 | 84 | 19 | 20 | 21 | 22 |
| Flame retardant composition-67 | 27 | | | | | | | | | |
| Flame retardant composition-68 | | 28 | | | | | | | | |
| Flame retardant composition-69 | | | 28 | | | | | | | |
| Flame retardant composition-70 | | | | 25 | | | | | | |
| Flame retardant composition-71 | | | | | 27 | | | | | |
| Flame retardant composition-72 | | | | | | 25 | | | | |
| Comparative flame retardant composition-1 | | | | | | | 29 | 31 | | |
| Comparative flame retardant composition-6 | | | | | | | | | 25 | 27 |
| Flame retardancy test: UL-94V (1.6 mm) | V-0 | V-0 | V-0 | V-0 | V-0 | V-0 | NR | V-2 | NR | V-2 |

### [Examples 85 to 90 and Comparative Examples 7, 8, 17 and 18]

In accordance with Table 11, flame-retardant synthetic resin compositions containing the respective flame retardant compositions were obtained in the same manner as in Example 29. The thus obtained flame-retardant synthetic resin compositions were each extruded at 200 to 230°C to produce a pellet, which was subsequently injection-molded at 200°C to obtain a test piece of 127 mm in length, 12.7 mm in width and 1.6 mm in thickness. As a flame retardancy test, this test piece was subjected to UL-94V test in accordance with the above-described test method. The results thereof are shown in Table 11. In the same manner, test pieces were prepared from the synthetic resin compositions obtained in Comparative Examples and subjected to UL-94V test. The results thereof are also shown in Table 11.

**[Table 11]**

| Formulation | Example | | | | | | Comparative Example | | | |
|---|---|---|---|---|---|---|---|---|---|---|
| | 85 | 86 | 87 | 88 | 89 | 90 | 7 | 8 | 17 | 18 |
| Flame retardant composition-73 | 24 | | | | | | | | | |
| Flame retardant composition-74 | | 24 | | | | | | | | |
| Flame retardant composition-75 | | | 24 | | | | | | | |
| Flame retardant composition-76 | | | | 21 | | | | | | |
| Flame retardant composition-77 | | | | | 20 | | | | | |
| Flame retardant composition-78 | | | | | | 17 | | | | |
| Comparative flame retardant composition-1 | | | | | | | 24 | 26 | | |
| Comparative flame retardant composition-6 | | | | | | | | | 21 | 25 |
| Flame retardancy test: UL-94V (1.6mm) | V-0 | V-0 | V-0 | V-0 | V-0 | V-0 | V-2 | V-2 | V-2 | V-2 |

As apparent from Examples and Comparative Examples, it was confirmed that the flame retardant compositions of the present invention comprising the components (A), (B) and (C) are capable of imparting a synthetic resin with excellent flame retardancy.

## Claims

1. A flame retardant composition, comprising:
20 to 50 parts by mass of the following component (A);
50 to 80 parts by mass of the following component (B) (with a proviso that the total amount of said components (A) and (B) is 100 parts by mass); and
0.5 to 15 parts by mass of the following component (C):
Component (A): a (poly)phosphate compound represented by the following Formula (1)
Component (B): a (poly)phosphate compound represented by the following Formula (3)
Component (C): a polyhydric alcohol compound, wherein Component (C) is dipentaerythritol, or is 1,3,5-tris(2-hydroxyethyl)isocyanurate and/or sorbitol 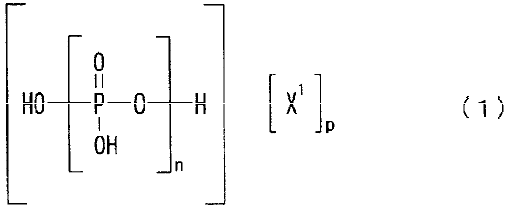 (wherein, n represents a number of 1 to 100; X¹ represents ammonia or a triazine derivative represented by the following Formula (2); and 0 < p ≤ n + 2) 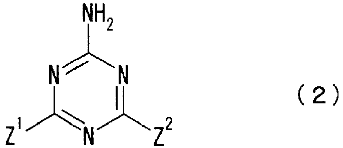 (wherein, Z¹ and Z² each independently represent a group selected from the group consisting of a -NR⁵R⁶ group [wherein, R⁵ and R⁶ each independently represent a hydrogen atom, a linear or branched alkyl group having 1 to 6 carbon atoms or a methylol group], a hydroxy group, a mercapto group, a linear or branched alkyl group having 1 to 10 carbon atoms, a linear or branched alkoxy group having 1 to 10 carbon atoms, a phenyl group and a vinyl group) 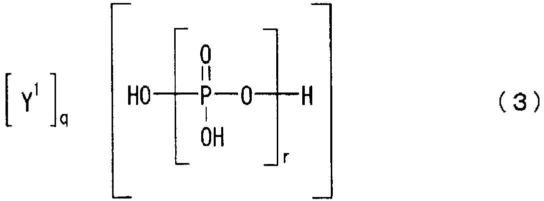 (wherein, r represents a number of 1 to 100; Y¹ represents [R¹R²N(CH₂)ₘNR³R⁴], piperazine or a piperazine ring-containing diamine; R¹, R², R³ and R⁴ each represent a hydrogen atom or a linear or branched alkyl group having 1 to 5 carbon atoms, which R¹, R², R³ and R⁴ may be the same group or different groups; m represents an integer of 1 to 10; and 0 < q ≤ r + 2).

2. The flame retardant composition according to claim 1, further comprising zinc oxide as a component (D) in an amount of 0.01 to 10 parts by mass with respect to a total of 100 parts by mass of said components (A) and (B).

3. The flame retardant composition according to claim 1, further comprising an anti-dripping agent as a component (E) in an amount of 0.005 to 5 parts by mass with respect to a total of 100 parts by mass of said components (A) and (B).

4. The flame retardant composition according to claim 1, wherein said component (A) is melamine pyrophosphate represented by said Formula (1), wherein n is 2, p is 2 and X¹ is melamine (Z¹ and Z² are -NH₂ in said Formula (2)).

5. The flame retardant composition according to claim 1, wherein said component (B) is a piperazine polyphosphate represented by said Formula (3), wherein q is 1 and Y¹ is piperazine.

6. The flame retardant composition according to claim 5, wherein said piperazine polyphosphate is piperazine pyrophosphate.

7. A flame-retardant synthetic resin composition, obtained by incorporating the flame retardant composition according to claim 1 into a synthetic resin.

8. The flame-retardant synthetic resin composition according to claim 7, wherein said synthetic resin is a polyolefin-based resin.

9. A flame-retardant synthetic resin composition, comprising the flame retardant composition according to claim 1 in an amount of not less than 15% by mass but less than 30% by mass.

10. A molded article, obtained from the flame-retardant synthetic resin composition according to claim 7.

## Patentansprüche

1. Eine flammhemmende Zusammensetzung, die Folgendes umfasst:
20 bis 50 Massenteile des nachfolgenden Bestanteils (A);
50 bis 80 Massenteile des nachfolgenden Bestandteils (B) (vorausgesetzt das der Gesamtbetrag der genannten Bestandteile (A) und (B) 100 Massenteile ausmacht);
0,5 bis 15 Massenteile des nachfolgenden Bestandteils (C):
Bestandteil (A): eine (Poly)phosphatverbindung, die durch die nachfolgende Formel (1) repräsentiert wird
Bestandteil (B): eine (Poly)phosphatverbindung, die durch die nachfolgende Formel (3) repräsentiert wird
Bestandteil (C): eine mehrwertige Alkoholverbindung, wobei Bestandteil (C) Dipentaerythritol oder 1,3,5-Tris-(2-Hydroxyethyl)-Isocyanurat und/oder Sorbitol ist. 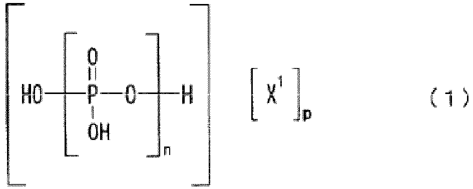 (wobei n eine Zahl von 1 bis 100 repräsentiert; X¹ Ammoniak oder ein Triazinderivat repräsentiert, das durch die folgende Formel (2) repräsentiert wird, und 0 < p ≤ n + 2) 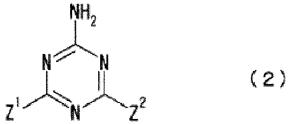 (wobei Z¹ und Z² jeweils unabhängig eine Gruppe repräsentieren, die aus der Gruppe bestehend aus einer -NR⁵R⁶-Gruppe [wobei R⁵ und Rjeweils unabhängig ein Wasserstoffatom, eine gerade oder verzweigte Alkylgruppe mit 1 bis 6 Kohlenstoffatomen oder eine Methylgruppe repräsentieren], einer Hydroxygruppe, einer Mercaptogruppe, einer geraden oder verzweigten Alkylgruppe mit 1 bis 10 Kohlenstoffatomen, einer geraden oder verzweigten Alkoxygruppe mit 1 bis 10 Kohlenstoffatomen, einer Phenylgruppe und einer Vinylgruppe ausgewählt wird) 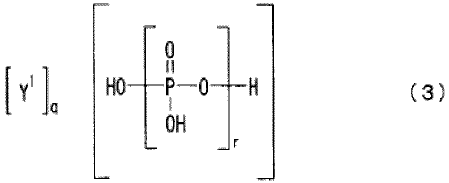 (wobei r eine Zahl von 1 bis 100 repräsentiert; Y¹ [R¹R²N(CH₂)mNR³R⁴], Piperazin oder einen Piperazinring, der Diamin enthält, repräsentiert; R¹, R², R³ und R⁴ jeweils ein Wasserstoffatom oder eine gerade oder verzweigte Alkylgruppe mit 1 bis 5 Kohlenstoffatomen repräsentieren, wobei R¹, R², R³ und R⁴ die selbe Gruppe oder verschiedene Gruppen sein können; m eine Ganzzahl von 1 bis 10 repräsentiert und 0 < q ≤ r + 2).

2. Die flammhemmende Zusammensetzung entsprechend Anspruch 1, die zudem Zinkoxid als Bestandteil (D) in einer Menge von 0,01 bis 10 Massenteilen hinsichtlich von insgesamt 100 Massenteilen der genannten Bestandteile (A) und (B) umfasst.

3. Die flammhemmende Zusammensetzung entsprechend Anspruch 1, die ein Tropfschutzmittel als Bestandteil (E) in einer Menge von 0,005 bis 5 Massenteilen hinsichtlich von insgesamt 100 Massenteilen der genannten Bestandteile (A) und (B) umfasst.

4. Die flammhemmende Zusammensetzung entsprechend Anspruch 1, wobei der genannte Bestandteil (A) Melaminpyrophosphat ist, das durch die genannte Formel (1) repräsentiert wird, wobei n 2 ist, p 2 ist und X¹ Melamin ist (Z¹ und Z² sind - NH₂ in der genannten Formel (2)).

5. Die flammhemmende Zusammensetzung entsprechend Anspruch 1, wobei der genannte Bestandteil (B) ein Piperazinpolyphosphat ist, das durch die genannte Formel (3) repräsentiert wird, wobei q 1 ist und Y¹ Piperazin ist.

6. Die flammhemmende Zusammensetzung entsprechend Anspruch 5, wobei das genannte Piperazinpolyphosphat Piperazinpyrophosphat ist.

7. Eine flammhemmende Kunstharzzusammensetzung, die durch Inkorporation der flammhemmenden Zusammensetzung entsprechend Anspruch 1 in ein Kunstharz erhalten wird.

8. Die flammhemmende Kunstharzzusammensetzung entsprechend Anspruch 7, wobei das genannte Kunstharz ein Harz auf Polyolefinbasis ist.

9. Eine flammhemmende Kunstharzzusammensetzung, welche die flammhemmende Zusammensetzung entsprechend Anspruch 1 in einer Menge von nicht weniger als 15 Massenprozent, aber weniger als 30 Massenprozent umfasst.

10. Ein Formartikel, der durch die flammhemmende Kunstharzzusammensetzung entsprechend Anspruch 7 erhalten wird.

## Revendications

1. Composition ignifuge, comprenant :
20 à 50 parties en masse du composant (A) suivant ;
50 à 80 parties en masse du composant (B) suivant (à condition que la quantité totale desdits composants (A) et (B) est de 100 parties en masse) ; et
0,5 à 15 parties en poids du composant (C) suivant;
Composant (A) : un composé (poly)phosphate représenté par la formule (1) suivante.
Composant (B) : un composé (poly)phosphate représenté par la formule (3) suivante.
Composant (C) : un composé alcool polyhydrique, le composant (C) étant le dipentacrythritol ou le 1,3,5-tris(2-hydroxyéthyle)isocyanurate et/ou le sorbitol 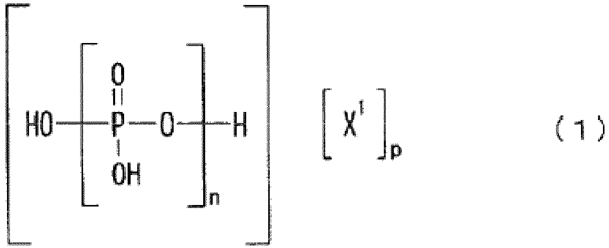 (où n représente un nombre allant de 1 à 100 ; X¹ représente l'ammoniaque ou un dérivé de la triazine représenté par la formule (2) suivante ; et 0 < p ≤ n + 2) 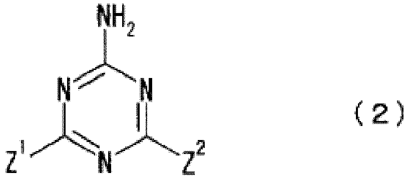 (où Z¹ et Z² représentent chacun indépendamment un groupe sélectionné dans le groupe constitué d'un groupe -NR⁵R⁶ [dans lequel R⁵ et R⁶ représentent chacun indépendamment un atome d'hydrogène, un groupe alkyle linéaire ou ramifié portant 1 à 6 atomes de carbone ou un groupe méthylol], un groupe hydroxy, un groupe mercapto, un groupe alkyle linéaire ou ramifié portant 1 à 10 atomes de carbone, un groupe alcoxy linéaire ou ramifié portant 1 à 10 atomes de carbone, un groupe phényle et un groupe vinyle) 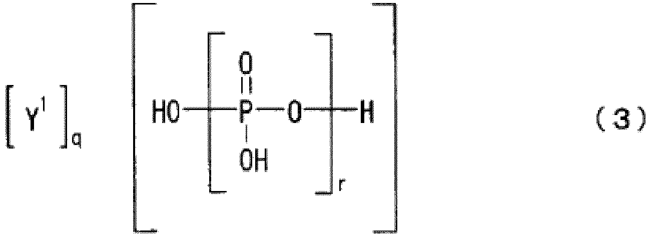 où r représente un nombre allant de 1 à 100 ; Y¹ représente [R¹R²N(CH₂)mNR³R⁴], la pipérazine ou une diamine contenant un cycle pipérazine ; R¹, R², R³ et R⁴ représentent chacun un atome d'hydrogène ou un groupe alkyle linéaire ou ramifié portant 1 à 5 atomes de carbone, lesquels R¹, R², R³ et R⁴ peuvent être un groupe identique ou des groupes différents ; m représente un nombre entier valant de 1 à 10 ; et 0 < q ≤ r + 2).

2. Composition ignifuge selon la revendication 1, comprenant en outre de l'oxyde de zinc en tant que composant (D) en une quantité de 0,01 à 10 parties en masse par rapport à un total de 100 parties en masse desdits composants (A) et (B).

3. Composition ignifuge selon la revendication 1, comprenant en outre un agent antigoutte en tant que composant (E) en une quantité de 0,005 à 5 parties en masse par rapport à un total de 100 parties en masse desdits composants (A) et (B).

4. Composition ignifuge selon la revendication 1, dans laquelle ledit composant (A) est le phosphate de mélamine représenté par ladite formule (1), dans laquelle n vaut 2, p vaut 2 et X¹ représente la mélamine (Z¹ et Z² représentent NH₂ dans ladite formule (2)).

5. Composition ignifuge selon la revendication 1, dans laquelle ledit composant (B) est le polyphosphate de pipérazine représenté par la formule (3), dans laquelle q vaut 1 et Y¹ représente la pipérazine.

6. Composition ignifuge selon la revendication 5, dans laquelle ledit polyphosphate de pipérazine est un pyrophosphate de pipérazine.

7. Composition de résine synthétique ignifuge, obtenue en incorporant la composition ignifuge selon la revendication 1 dans une résine synthétique.

8. Composition de résine synthétique ignifuge selon la revendication 7, dans laquelle ladite résine synthétique est une résine à base de polyoléfine.

9. Composition de résine synthétique ignifuge, comprenant la composition ignifuge selon la revendication 1 en une quantité de pas moins de 15 % en masse mais de moins de 30 % en masse.

10. Article moulé, obtenu à partir de la composition de résine synthétique ignifuge selon la revendication 7.
